Europäisches Patentamt

European Patent Office

Office européen des brevets

(19)

(11) **EP 1 522 951 A1**

(12) **DEMANDE DE BREVET EUROPEEN**

(43) Date de publication:
**13.04.2005 Bulletin 2005/15**

(51) Int Cl.$^7$: **G06K 9/20**, H04N 1/40

(21) Numéro de dépôt: **04077715.3**

(22) Date de dépôt: **17.09.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **10.10.2003 FR 0311918**

(71) Demandeur: **FRANCE TELECOM**
**75015 Paris (FR)**

(72) Inventeurs:
• **Wolf, Christian**
  **69100 Villeurbanne (FR)**
• **Jolion, Jean-Michel**
  **69100 Villeurbanne (FR)**
• **Laurent, Christophe**
  **35630 Vignoc (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(54) **Détermination de caractéristiques textuelles de pixels**

(57)    Pour détecter des informations textuelles complexes artificielles et de scène dans une image, des caractéristiques textuelles des pixels de l'image sont déterminées suffisamment discriminantes pour classifier les pixels en "texte" et "non texte". Ces caractéristiques reposent, outre des gradients accumulés, sur une estimation de rectangles contenant du texte en déterminant une largeur faible et une hauteur élevée au niveau d'un pic dans un intervalle de variation de gradients accumulés autour de chaque pixel. Les caractéristiques textuelles peuvent être déduites également d'une détection de coins des caractères par quantification et lissage d'angles de gradient et association de réponse directionnelle de coin à chaque pixel.

FIG.3

A1 — Accumulation des gradients horizontaux $G_H$

A2 — Estimation du mode

A3 — Extraction et détermination des caractéristiques textuelles

A4 — Détermination de la présence de ligne de base

A5 — Détermination des caractéristiques textuelles suivant les orientations et sur deux niveaux d'une pyramide gaussienne

A6 — Classification des pixels

**Description**

La présente invention concerne la détermination de caractéristiques textuelles de pixels pour discriminer des pixels de texte et des pixels de non texte afin de détecter des informations textuelles dans des images ou dans des suites d'images formant des séquences vidéo.

La détection d'informations textuelles est de première importance pour de nombreuses applications tel que l'indexation d'images. L'indexation d'une image se décompose généralement en quatre phases :

- détection des informations textuelles contenues dans l'image comprenant généralement une sous-phase de classification des pixels de l'image,
- extraction des informations textuelles détectées,
- reconnaissance de caractères dans les informations textuelles extraites, et
- indexation de l'image en fonction des informations textuelles reconnues.

La phase de reconnaissance de caractères est effectuée généralement par un système de reconnaissance optique de caractères OCR (Optical Character Recognition).

Les informations textuelles contenues dans des images sont de deux types, "texte de scène" ou "texte artificiel". Le "texte artificiel" est un texte qui a été ajouté à une image originale, par exemple un sous-titrage. Le "texte de scène" est le texte contenu dans l'image originale, par exemple le texte d'une publicité ou d'un tee-shirt. Le "texte de scène" est plus difficile à détecter que le "texte artificiel" compte tenu des caractéristiques plus complexes du "texte de scène" tels que l'orientation, la couleur et la taille de la fonte du texte.

Les algorithmes de détection d'informations textuelles sont plus ou moins performants selon les caractéristiques du texte à détecter.

Des premiers algorithmes de détection d'informations textuelles comportaient une segmentation des caractères, avant de grouper les caractères pour constituer des mots et des lignes. Le but de la segmentation est de diviser une image originale en plusieurs zones distinctes.

Des algorithmes de détection d'informations textuelles reposent sur une classification des pixels d'une image en "texte" et "non texte" effectuée ligne par ligne. Ainsi un regroupement colorimétrique des pixels de chaque ligne est effectué afin de déterminer les pixels appartenant à une zone de "texte". Des histogrammes de segments de ligne de couleur uniforme sont déterminés et comparés entre eux afin de former des rectangles comprenant du texte de l'image.

En variante, des gradients d'intensité lumineuse de chaque ligne sont évalués et les lignes sont découpées en segments ayant un niveau de gris similaire. Les lignes adjacentes sont fusionnées suivant un critère statistique de similarité.

Dans d'autres variantes, un traitement hiérarchique des composantes connexes de l'image est utilisé afin de déterminer les zones de texte.

Les algorithmes de détection d'informations textuelles basés sur la segmentation sont performants pour des images de résolution élevée, comme des images extrait de journaux, mais le sont beaucoup moins pour des images de résolution faible, dans lesquelles des caractères sont en contact et ont des tailles de fonte faibles.

D'autres algorithmes de détection d'informations textuelles sont basés sur une détection de contours et une analyse de texture. Certains algorithmes exploitent le contraste important des traits composant des caractères d'un texte, recherchent des contours verticaux et regroupent les contours verticaux en rectangle. Ces algorithmes de détection d'informations textuelles nécessitent une phase d'amélioration de l'image extraite à partir des rectangles avant la phase de reconnaissance de caractères. Par exemple, on procède à une phase de binarisation après le regroupement des contours en évaluant des gradients accumulés pour chaque pixel de l'image.

D'autres algorithmes de détection d'informations textuelles reposent sur un apprentissage, et utilisent parfois des ondelettes de Haar pour extraire des caractéristiques textuelles de chaque pixel composant une image. En faisant glisser une fenêtre de taille fixe sur l'image, des coefficients d'ondelettes sont injectés dans un réseau de neurones de type perceptron multi-couches MLP (Multi Layer Perceptron) afin de classer chaque pixel en tant que "texte" ou "non texte".

En variante, le réseau de neurones classe chaque pixel d'une image en fonction d'une densité des contours, d'une variance d'un histogramme, etc.

La classification des pixels en fonction de caractéristiques textuelles est généralement effectuée par des réseaux de neurones ou des machines à vecteurs supports SVM (Support Vector Machines). Ces moyens de classification tiennent compte de la classification des pixels précédents pour classer les pixels suivants, et ainsi "apprennent" à classer.

D'autres algorithmes de détection d'informations textuelles récents agissent directement sur la forme compressée des images ou des séquences vidéo, par exemple sur des images aux formats de compression MPEG 1, MPEG 2, etc.

Les pixels de texte et les pixels de non texte ne peuvent pas être discriminés en considérant uniquement des caractéristiques textuelles locales des pixels d'une image. Les principales caractéristiques textuelles d'un texte sont extraits de sa géométrie et se traduisent par la présence d'une ligne de base et par la possibilité d'isoler le texte en délimitant une zone autour de celui-ci. La ligne de base d'un texte fait référence à l'alignement des caractères du texte. De plus, les caractéristiques textuelles de texture sont de plus en plus incertaines lorsque le texte à traiter est de plus en plus court.

La présente invention a pour objectif de remédier aux inconvénients précités en déterminant des caractéristiques textuelles des pixels d'une image plus complexes sur lesquelles est basée la détection d'informations textuelles dans l'image afin d'améliorer l'efficacité et la précision de la détection d'informations textuelles.

Le procédé de détermination de caractéristiques textuelles de pixels pour discriminer des pixels de texte et des pixels de non texte dans une image, comprenant une accumulation de gradients d'intensité lumineuse suivant une première direction pour chaque pixel de l'image en des gradients accumulés, est caractérisé en ce qu'il comprend les étapes suivantes :

- pour chaque pixel courant, détermination d'un couple de bords dans une fonction des gradients accumulés pour un intervalle de pixels prédéterminé s'étendant suivant une deuxième direction perpendiculaire à la première direction et centré sur le pixel courant, en recherchant une hauteur élevée entre la valeur maximale des gradients accumulés et la moyenne des gradients accumulés auxdits bords et une largeur faible entre les bords, pour différentes valeurs des deux bords respectivement comprises dans les deux moitiés de l'intervalle prédéterminé ; et
- discrimination des pixels de texte et des pixels de non texte en fonction des hauteurs élevées et des largeurs faibles pour les couples de bords déterminés des pixels.

Des caractéristiques textuelles des pixels autres que les hauteurs et largeurs "de mode" déterminées précédemment, comme on le verra par la suite, comme la différence de gradients accumulés aux bords et la moyenne des gradients accumulés entre les bords déterminés, sont déterminés pour chaque pixel afin de discriminer les pixels de texte et de non texte également en fonction des différences et des moyennes de gradients accumulés déterminées pour les couples de bords des pixels.

Plus précisément, la détermination d'un couple de bords pour chaque pixel courant peut être fonction d'une maximalisation d'une variable dépendant de la largeur entre les deux bords, de gradients accumulés minimal et maximal dans l'intervalle prédéterminé, de la hauteur entre la valeur maximale des gradients accumulés et la moyenne des gradients accumulés, et de la moyenne des gradients accumulés entre les deux bords, pour différentes valeurs des deux bords respectivement comprises dans les deux moitiés de l'intervalle prédéterminé

Une autre caractéristique textuelle servant également à discriminer les pixels de texte et les pixels de non texte peut être une somme représentative de la présence d'une ligne de base de texte et résultant d'une sommation des différences de largeur faibles pour des couples de pixels voisins le long d'une fenêtre orientée suivant la première direction et de largeur prédéterminée.

Selon une autre réalisation de l'invention qui peut être combinée à la détermination des caractéristiques précédentes, le procédé repose sur une détection de coins de caractères. Il comprend les étapes suivantes pour chaque pixel courant de l'image :

- détermination de réponses directionnelles de coin suivant quatre orientations prédéterminées ;
- quantification d'un angle de gradient relativement dans quatre orientations prédéterminées ;
- lissage de l'angle de gradient quantifié en fonction des angles de gradient quantifiés et de gradients de pixels voisins au pixel ; et
- association à chaque pixel de l'une des réponses directionnelles de coins en fonction de l'angle de gradient lissé du pixel.

L'angle de gradient quantifié de chaque pixel courant est de préférence lissé en fonction d'une maximalisation de sommes de gradients des pixels voisins du pixel courant, pondérés et orientés respectivement suivant les orientations prédéterminées. Dans une somme de gradients pour une orientation prédéterminée respective des coefficients de pondération des gradients pour le pixel courant, pour des pixels immédiatement voisins suivant les première et deuxième directions et pour des pixels voisins suivant des directions diagonales aux première et deuxième directions sont de préférence décroissants.

Le procédé peut comprendre encore les étapes suivantes :

- association à chaque pixel de la plus grande des réponses directionnelles associées au pixel courant et au pixel précédant celui-ci selon un parcours prédéterminé ;

- accumulation des réponses directionnelles de coin associées à chaque pixel et aux pixels voisins à celui-ci suivant les première et deuxième directions ;
- afin de discriminer les pixels de texte et de non texte également en fonction des réponses directionnelles de coin accumulées.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :

- la figure 1 est une représentation schématique d'un système informatique mettant en oeuvre le procédé pour déterminer des caractéristiques textuelles des pixels de l'image selon l'invention ;
- la figure 2 est une représentation schématique classifiant l'accumulation de gradient suivant deux directions différentes ;
- la figure 3 est un algorithme du procédé pour déterminer des caractéristiques textuelles basé sur une estimation de mode des pixels de l'image selon une première réalisation préférée de l'invention ;
- la figure 4 est une image originale dans laquelle est indiquée par une intersection de deux lignes une position d'un pixel pour la première réalisation ;
- la figure 5 est un graphe présentant des gradients accumulés horizontalement en des pixels de l'image dans un intervalle vertical selon la première réalisation ;
- la figure 6A montre une image originale ;
- les figures 6B à 6H sont des exemples d'images de caractéristiques résultantes de l'image originale à la figure 6A selon la première réalisation ; et
- la figure 7 est un algorithme du procédé pour déterminer des caractéristiques textuelles basées sur une détection de coins de caractères de l'image selon une deuxième réalisation préférée de l'invention.

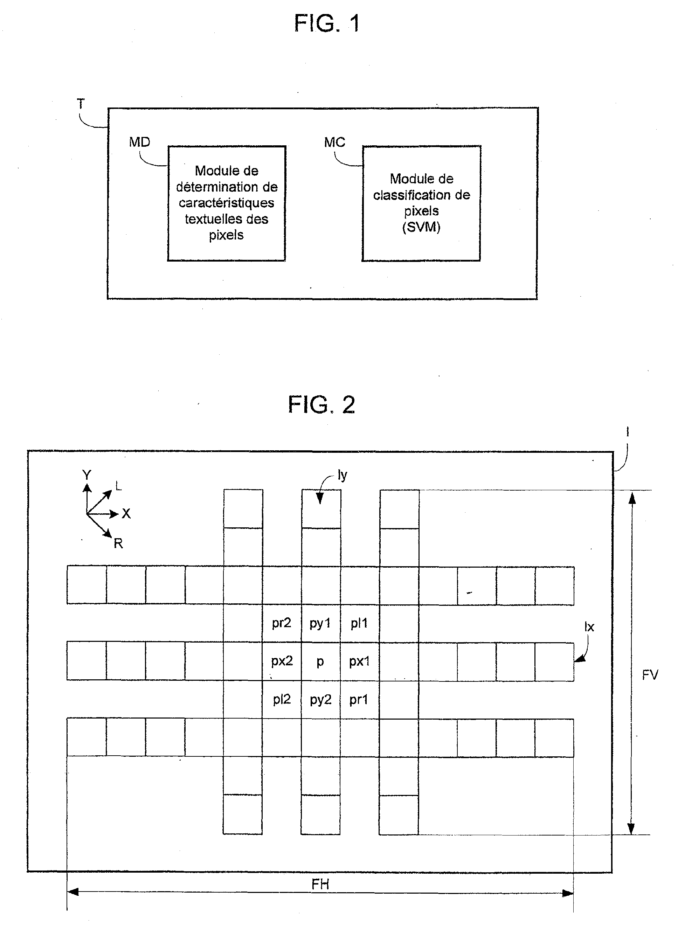

Un système informatique en tant que moyen de traitement de données mettant en oeuvre le procédé pour déterminer des caractéristiques textuelles selon l'invention comprend principalement un module logiciel de détermination de caractéristiques textuelles des pixels de l'image MD représenté à la figure 1.

Le système informatique est installé dans un terminal T du type ordinateur personnel.

Le système informatique a reçu et enregistré au moins une image numérique ou des suites d'images numériques formant une séquence vidéo. Chaque image I est traitée l'une après l'autre par le système informatique. Une image I est supposée contenir au moins un texte, un texte étant une partie de l'image I comportant des caractères textuels.

Un procédé de détection d'informations textuelles comprend essentiellement deux phases principales, une première phase de détermination de vecteurs de caractéristiques textuelles des pixels de l'image et une deuxième phase de classification des pixels de l'image au cours de laquelle des pixels de texte et des pixels de non texte sont déterminés en fonction des vecteurs de caractéristiques textuelles déterminés.

L'objectif de la première phase est de déterminer des caractéristiques textuelles des pixels des images suffisamment discriminantes pour classifier les pixels en "texte" et "non texte" lors de la deuxième phase. Un pixel classé en "texte" est un pixel considéré comme appartenant à un caractère textuel et est appelé "pixel de texte", contrairement à un "pixel de non texte". Le résultat de cette première phase est un vecteur de caractéristiques textuelles déterminé pour chaque pixel de l'image.

L'objectif de la deuxième phase est de classifier chaque pixel en fonction des vecteurs de caractéristiques textuelles déterminés à l'aide d'un algorithme, tel que l'un des algorithmes mis en oeuvre dans des machines à vecteurs supports SVM (Support Vector Machine).

Par convention, la direction horizontale est une première direction X considérée parallèle aux lignes (rangées) de pixels d'une image rectangulaire et parallèle aux grands côtés de l'image, et la direction verticale est une deuxième direction Y considérée parallèle aux colonnes de pixels de l'image et parallèle aux petits côtés de l'image.

Selon la présente invention, un texte dans une image est modélisé comme un regroupement de traits verticaux alignés horizontalement. De ce modèle découle deux propriétés :

- l'accumulation de gradients d'intensité lumineuse créée par le regroupement des traits, et
- l'alignement des extrémités des traits d'un texte suivant la même direction que le texte lui-même, quelle que soit la direction horizontale, verticale ou oblique du texte.

La première propriété est modélisée par une valeur de caractéristique textuelle en accumulant des gradients horizontaux dans une fenêtre autour de chaque pixel.

La deuxième propriété est modélisée par deux approches respectivement décrites ci-après :

- la détermination d'une première estimation de rectangles contenant du texte, et d'une régularité et d'une validité de la géométrie de la surface de texte ;
- la détection de coins des caractères sur le contour d'un rectangle contenant le texte, c'est-à-dire qui est circonscrit sensiblement au texte, et la propagation de ces caractéristiques de coins à l'intérieur de la surface de texte.

Dans la première réalisation de l'invention, une première détection grossière est effectuée en déterminant une ligne de base d'un texte de l'image I comme des extrémités d'une surface de haute densité dans l'image. La surface de haute densité est la surface du rectangle contenant un texte de l'image, c'est-à-dire sensiblement circonscrit au texte.

Détecter une ligne de base directement, en utilisant par exemple la transformée de Hough, s'avère très difficile à cause de l'irrégularité des rectangles contenant le texte et de l'éventuelle présence d'un texte court. De plus, des frontières entre des zones de texte et de non texte peuvent être floues, surtout lorsque la direction du texte ne coïncide pas avec la direction du filtre directionnel de gradient. Par exemple, un texte avec une orientation de quinze degrés par rapport à l'horizontale n'est pas aussi bien détecté avec un filtre de gradient horizontal. La détection directe des lignes et des contours est ainsi un problème complexe.

Pour remédier à la complexité de la détection directe d'une ligne de base, l'invention détermine la hauteur d'un rectangle éventuel de texte associé à un pixel courant, et compare les différences de ces hauteurs entre les pixels voisins au pixel courant. Dans des zones de texte, les hauteurs des rectangles déterminées doivent rester approximativement constantes.

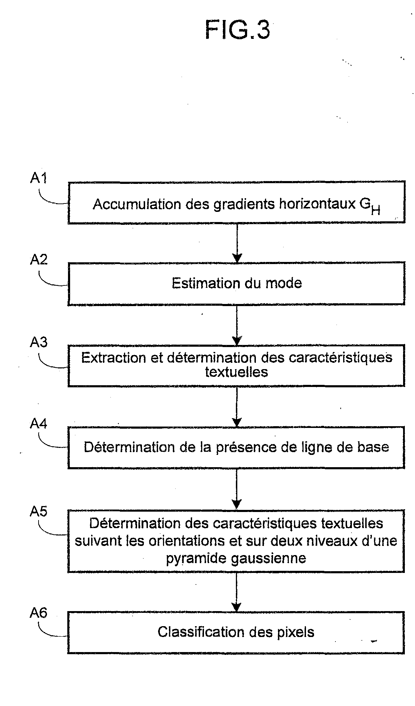

L'algorithme du procédé d'estimation de mode comprend principalement les étapes A1 à A6 montrées à la figure 3 selon la première réalisation préférée de l'invention.

Afin de caractériser les pixels de l'image I, l'invention utilise le principe connu de l'accumulation de gradients d'intensité lumineuse s'appuyant sur le fait qu'un pixel de texte de l'image a un gradient dont l'amplitude est élevée. Un gradient horizontal accumulé d'un pixel courant p de coordonnées x et y dans l'image I est la somme de gradients élémentaires horizontaux d'une intensité lumineuse, par exemple la luminance de pixel, pour des couples de pixels consécutifs sur la ligne d'image 1x à laquelle appartient le pixel p et situés à proximité de celui-ci. Par exemple, selon la figure 2, le pixel p est associé à un gradient horizontal égal à la somme des 12 gradients élémentaires horizontaux entre les (2 x 6 + 1) = 13 pixels de part et d'autre du pixel p, y compris ce dernier, dans la ligne d'image lx. Le module de détermination des caractéristiques MD détermine ainsi un gradient horizontal accumulé $G_H$ pour chaque pixel de l'image I en sommant les gradients élémentaires horizontaux au moyen d'un filtre d'accumulation de gradients élémentaires horizontaux dont la réponse $G_H$ est :

$$G_H(x,y) \;=\; \sqrt{\int_{-FH/2}^{+FH/2}\left[\frac{\partial I}{\partial x}\right]^2 dx}$$

où FH dénote la taille de la fenêtre des gradients élémentaires horizontaux qui sont additionnés, par exemple égale à 13, et I dénote l'intensité lumineuse dans l'image I. La valeur du paramètre FH dépend de la taille des caractères du texte à détecter et du contraste de l'image.

La hauteur du rectangle contenant le texte de l'image I est déterminée à partir d'un profil vertical de la réponse du filtre de gradient horizontal, c'est-à-dire pour chaque pixel sur le grand axe du rectangle p, un intervalle vertical TV de N pixels, centré sur le pixel p est considéré. L'objectif de la prochaine étape A2 est d'estimer dans l'intervalle TV un mode pour le pixel p au centre de l'intervalle TV.

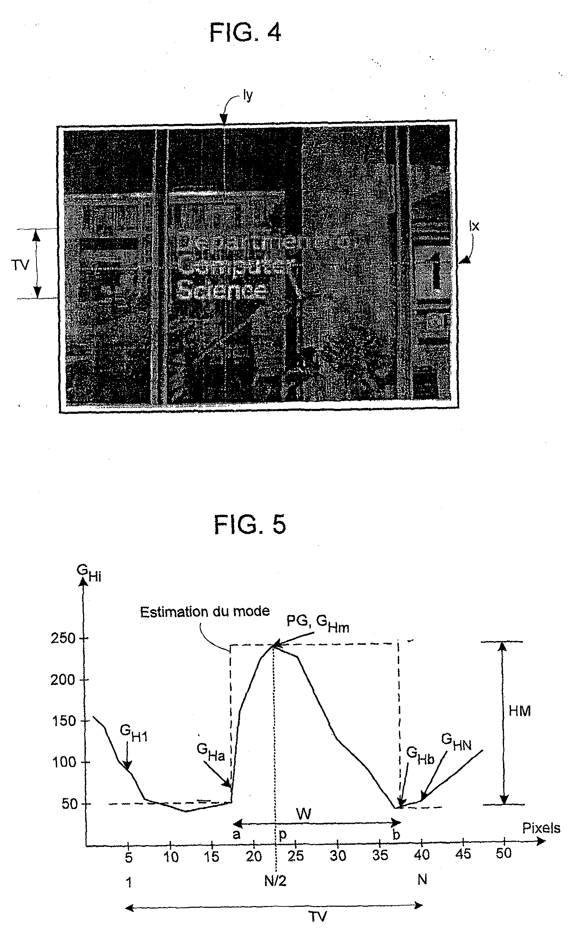

La figure 4 représente un exemple d'image originale dans lequel la hauteur du rectangle contenant du texte est estimée à la position d'un pixel courant p indiquée par une intersection de lignes horizontale 1x et verticale ly et incluse dans le rectangle contenant le texte. La figure 5 représente une courbe des gradients horizontaux accumulés $G_{Hi}$ des pixels de l'image originale, le long de la ligne verticale ly, et particulièrement dans l'intervalle vertical TV, avec un pic visible PG de gradients horizontaux accumulés dans l'intervalle TV centré sur le pixel p. La ligne en traits interrompus courts représente l'estimation du mode du pixel p. Le mode estimé est essentiellement dépendant du pic PG dans l'intervalle TV et de valeurs de gradient $G_{Ha}$ et $G_{Hb}$ aux bornes a et b d'un intervalle (a, b) définissant la largeur du mode.

L'orientation du texte influence la forme de l'estimation du mode sur l'intervalle vertical TV, c'est-à-dire la forme du pic PG. Avec un filtre de gradient horizontal, un texte horizontal engendre une estimation de mode sur l'intervalle vertical TV de forme sensiblement rectangulaire, alors qu'un texte légèrement oblique engendre une estimation de mode sur l'intervalle vertical TV de forme trapézoïdale et d'amplitude maximum plus réduite.

En dehors de l'intervalle vertical TV, l'estimation de mode est non définie. Lorsque le pixel p avoisine des pixels de non texte, les gradients horizontaux accumulés aux bornes de l'intervalle vertical TV sont proches de zéro. Les bornes a et b de l'intervalle de mode sont appelées les bords du mode estimé. Lorsque le rectangle contenant le texte est texturé ou possède des rectangles contenant du texte dans son voisinage, d'autres pics de gradients horizontaux accumulés sont présents dans l'intervalle vertical TV.

L'estimation de mode d'un pixel exploite les propriétés suivantes :

- une réponse du filtre de gradient horizontal qui est considérée importante dans l'intervalle vertical du mode estimé, typiquement lorsqu'un gradient $G_{Hm}$ au pic PG est supérieur à un seuil de gradient prédéterminé ;
- une différence importante entre la valeur de gradient maximum $G_{Hm}$ du mode estimé au pic PG, et la moyenne de gradient aux bords a et b du mode, appelée hauteur de mode HM, reflétant le contraste entre les luminances du pixel p et donc du texte par rapport aux pixels voisins du rectangle de texte, soit HM = $G_{Hm}$ - ($G_{Ha}$ + $G_{Hb}$)/2 ;
- une largeur de mode W qui est égale à la différence des valeurs des bords du mode estimé b - a plus 1, exprimée en nombre de pixels le long de la ligne 1x, et qui est aussi faible que possible afin d'éviter une détection de rectangles voisins contenant du texte ; la largeur de mode W correspond à la hauteur du rectangle contenant le texte du niveau du pixel courant et constitue une caractéristique textuelle ; cette largeur W est d'autant plus grande que le texte est écrit de plus en plus obliquement par rapport à l'horizontale.

Soit l'intervalle vertical TV de N pixels consécutifs dont les valeurs de gradients horizontaux accumulés sont $G_{H1}$ à $G_{HN}$ et dans lequel le pixel central N/2 correspond au pixel p pour lequel un mode est à estimer. Les valeurs possibles des bords a et b du mode à estimer, exprimées en nombre de pixels compris entre 1 et N, sont comprises dans les intervalles suivants :

$a \in [1, N/2 - 1]$ et $b \in [N/2 + 1, N]$.

Les valeurs a et b des bords du mode pour le pixel à estimer sont comprises entre les bornes à estimer de l'intervalle TV et sont différentes de la valeur centrale N/2 correspondant au pixel p. Ces valeurs a et b sont déterminées afin qu'un pic PG de gradients horizontaux accumulés soit inclus dans l'intervalle (a, b) et les valeurs des gradients horizontaux accumulés $G_{Ha}$ et $G_{Hb}$ aux bords de l'intervalle (a, b) soient faibles.

Les valeurs a et b des bords de mode sont estimées en maximisant une variable énoncée entre dans des crochets dans la relation suivante, c'est-à-dire en recherchant un mode estimé avec une hauteur de mode élevée HM et une largeur de mode faible W :

$$(a,b) = \arg\max_{a,b}\left[\alpha_1\left(1 - \frac{W}{N}\right) + \alpha_2 \frac{HM}{\max(G_{Hi}) - \min(G_{Hi})} + \alpha_3 \frac{\mu(G_i)}{\max(G_{Hi})}\right]$$

avec :

$G_i$ : gradient horizontal accumulé du pixel i dans l'intervalle TV, soit $i \in [a, b]$ ; selon la figure 5, par exemple, max $(G_{Hi})$ = $G_{Hm}$ au pic et min $(G_{Hi})$ < $G_{Hb}$ ;
W = b - a + 1 : largeur du mode ;
HM = max($G_{Hi}$) - ($G_{Ha}$ + $G_{Hb}$)/2, avec $i \in [a+1, b-1]$ : hauteur du mode ;

$$\mu(G_i) = \sum_{i=a}^{i=b} G_i / (b-a+1) \quad :$$

moyenne des valeurs de gradient du mode dans l'intervalle (a, b).

Les coefficients $\alpha_1$, $\alpha_2$ et $\alpha_3$ sont des coefficients de pondération et sont fixés de façon expérimentale : $\alpha_1$ = 0,25    $\alpha_2$ = 1,0    $\alpha_3$ = 0,5.

Une fois le mode estimé à partir de l'équation ci-dessus par le module de détermination des caractéristiques MD à l'étape A2, certaines caractéristiques déjà déterminées lors des étapes A1 et A2 sont extraites pour chaque pixel et d'autres sont déterminées par le module MD à l'étape A3, afin de déterminer globalement les caractéristiques suivantes pour chaque pixel : la largeur du mode, la hauteur du mode, la moyenne du mode, l'écart type du mode, etc.

Le module MD détermine également en tant que caractéristique textuelle une différence de hauteur de mode $|G_{Ha} - G_{Hb}|$ aux bords du mode pour chaque pixel de l'image I afin de considérer le contraste local dans l'environnement du rectangle contenant le texte.

En combinant les propriétés des modes estimés de plusieurs pixels voisins, le module de détermination des caractéristiques MD extrait également des caractéristiques sur une zone spatiale étendue.

Le module de détermination des caractéristiques MD vérifie la variabilité de la largeur du mode le long de pixels voisins qui sont alignés suivant l'une de plusieurs directions prédéterminées, par exemple une direction horizontale, et qui sont compris dans une fenêtre horizontale de largeur prédéterminée $S_W$ à l'étape A4. Pour cette vérification, le module MD détermine la différence des largeurs de mode pour chaque couple de pixels voisins et accumule, c'est-à-dire somme les différences pour tous les couples de la fenêtre $S_W$ et fournit une différence de largeur de mode accumulée $\Delta W(x, y)$ représentative de la présence d'une ligne de base suivant la direction horizontale et définie par :

$$\Delta W(x, y) = \sum_{i=-S_W/2}^{i=S_W/2} \left| W(x+i-1, y) - W(x+i, y) \right|$$

où $S_W$ dénote la largeur de la fenêtre horizontale, dépendant de la taille des caractères du texte, et $W(x,y)$ représente la largeur du mode au pixel de coordonnées x et y.

Les largeurs de mode W sont approximativement uniformes pour des pixels dans des zones de texte suivant la direction déterminée. Plus la différence accumulée $\Delta W$ est petite, plus elle indiquera avec précision que la direction prédéterminée, par exemple horizontale, suivant laquelle les couples de pixels sont alignés, est parallèle à la ligne de base du texte recherché.

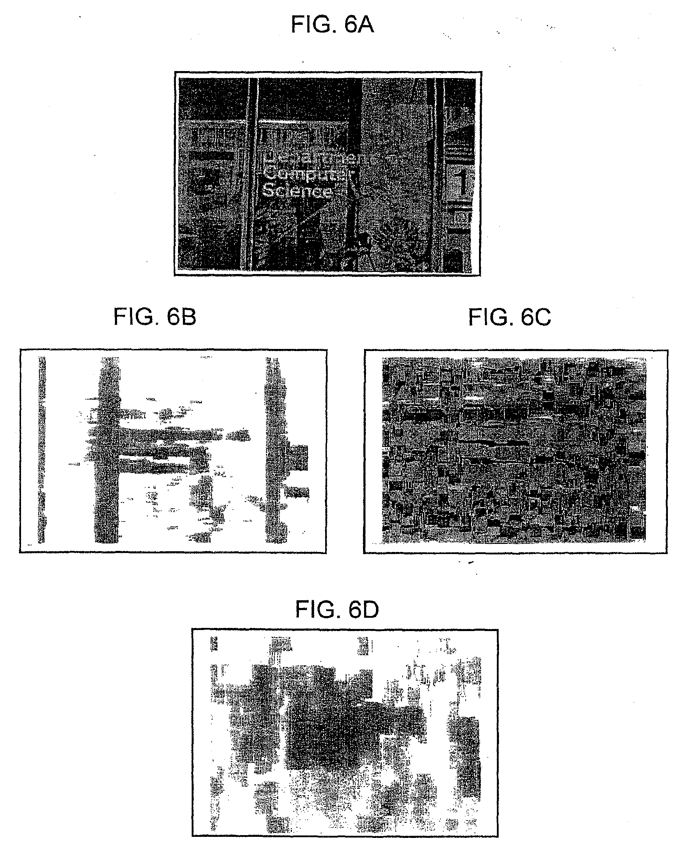

Une image originale I est montrée à la figure 6A et des images de caractéristiques résultantes de l'image originale sont montrées aux figures 6B à 6H. Dans ces figures, les valeurs de caractéristiques textuelles sont remises à l'échelle de façon indépendante pour chaque caractéristique textuelle afin de pouvoir afficher lisiblement les images.

La figure 6B représente une image des gradients horizontaux accumulés pour les pixels de l'image originale.

La figure 6C représente une image des largeurs de mode W pour les pixels de l'image originale. Plus la largeur de mode est petite, plus l'image est sombre et correspond à une zone de texte.

La figure 6D représente une image des hauteurs de mode HM pour les pixels de l'image originale. Plus la hauteur de mode est grande, plus l'image est sombre et correspond à une zone de texte.

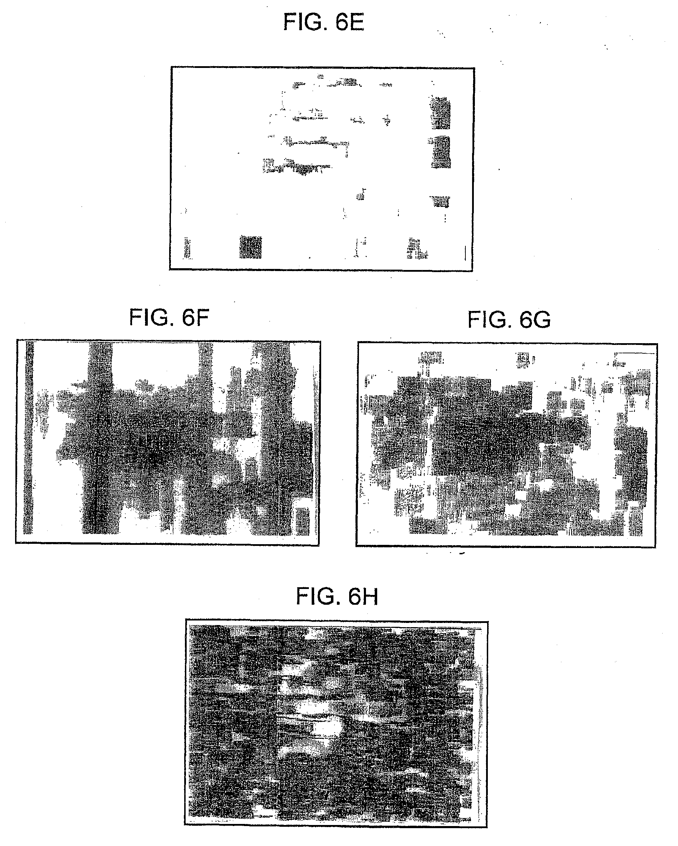

La figure 6E représente une image des différences de hauteur de mode $|G_{Ha}-G_{Hb}|$ aux bords de mode pour les pixels de l'image originale. Plus la différence de hauteur de mode est faible, plus l'image est claire et correspond à une zone de texte.

La figure 6F représente une image des moyennes de mode $\mu(G_i)$ pour les pixels de l'image originale. Plus la moyenne de mode est élevée, plus l'image est sombre et correspond à une zone de texte.

La figure 6G représente une image des écarts type de mode pour les pixels de l'image originale. Plus l'écart type est faible, plus l'image est sombre et correspond à une zone de texte.

La figure 6H représente une image de présence de ligne de base des pixels de l'image originale. Plus une ligne de base est présente, plus l'image est claire et correspond à une zone de texte.

Sept valeurs de caractéristiques textuelles finales, correspondant à une unique orientation et à un niveau de pyramide gaussienne, sont listées dans le tableau ci-après. Ainsi, les sept caractéristiques textuelles sont déterminées suivant les quatre principales orientations {X,Y,R,L} et pour deux niveaux de pyramide gaussienne à l'étape A5. Les caractéristiques textuelles d'un pixel sont regroupées au sein d'un vecteur à 7 * 4 * 2 = 56 caractéristiques textuelles produit par le module de détermination de caractéristiques MD.

| Valeurs | Caractéristique |
|---------|-----------------|
| 1 | Gradients accumulés horizontaux $G_H$ |
| 1 | Largeur de mode W |
| 1 | Hauteur de mode HM |
| 1 | Différence des hauteurs de mode aux bords $|G_{Ha}-G_{Hb}|$ |
| 1 | Moyenne des gradients de modes $\mu(G_i)$ |
| 1 | Ecart-type des modes |
| 1 | Présence de ligne de base $\Delta W$ |

Les vecteurs de caractéristiques textuelles des pixels de l'image I ont été déterminés notamment pour permettre à un module logiciel de classification de pixels MC de classifier chaque pixel dans l'une des deux classes texte ou non texte à une étape E6, et ainsi de discriminer les pixels de texte et les pixels de non texte dans l'image. Le module MC est inclus dans le terminal T comme montré à la figure 1. Dans la réalisation préférée de l'invention le module de classification est une machine à vecteurs de support SVM (Support Vector Machine).

Avant que la machine à vecteurs de support ne classifie les pixels en fonction des vecteurs de caractéristiques textuelles, deux phases initiales sont nécessaires :

- une phase d'apprentissage à partir d'échantillons,
- et une phase de généralisation.

Les échantillons sont dans la présente invention des pixels. La phase d'apprentissage consiste à déterminer manuellement la classe de quelques pixels d'une image afin que la machine à vecteurs de support SVM généralise son apprentissage pour classifier automatiquement les pixels en fonction de leurs vecteurs de caractéristiques textuelles.

Dans la présente invention, la phase d'apprentissage repose sur l'approche connue "Bootstrapping". Afin d'estimer une erreur de généralisation, une validation croisée à N partitions de chacune des deux classes de pixels texte et non texte déterminées précédemment avec l'algorithme de bootstrapping est effectuée.

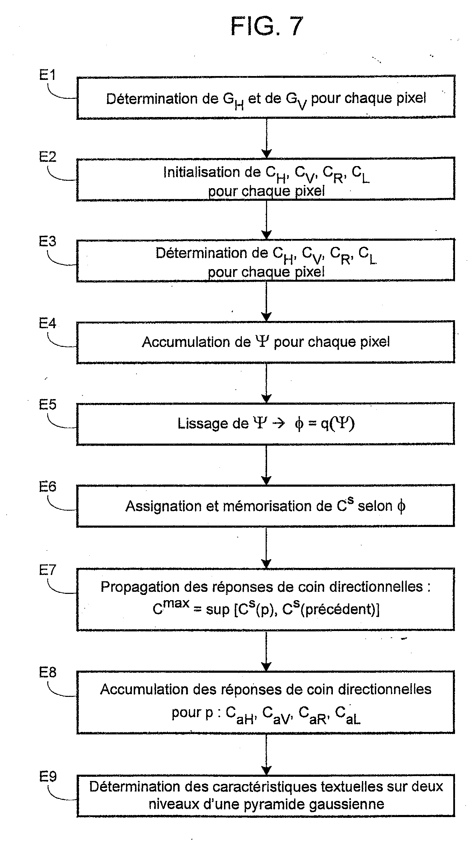

L'algorithme du procédé pour déterminer les caractéristiques textuelles pour les pixels de l'image est basé, selon la deuxième réalisation préférée, sur une détection des coins des caractères textuels de l'image et comprend principalement les étapes E1 à E9 montrées à la figure 7.

Le module de détermination des caractéristiques MD détecte des points extrêmes des traits des caractères de l'image I, appelés également coins des caractères. Les coins des caractères sont localisés sur le contour du rectangle contenant les caractères textuels de l'image I.

Le module de détermination des caractéristiques MD détermine l'accumulation des gradients horizontaux de chaque pixel de l'image I à l'étape E1, grâce au filtre de gradient horizontal décrit précédemment à l'étape A1, afin d'associer le gradient horizontal accumulé $G_H(x, y)$ en tant que caractéristique textuelle, au pixel courant p.

Un gradient vertical du pixel courant dans l'image I est la somme de gradients élémentaires verticaux d'intensité lumineuse pour des couples de pixels consécutifs sur la colonne d'image ly à laquelle appartient le pixel p et situés à proximité de celui-ci. Par exemple, selon la figure 2, le pixel p est associé à un gradient vertical égal à la somme des 8 gradients élémentaires verticaux entre les (2 x 4 + 1) = 9 pixels de part et d'autre du pixel p, y compris ce dernier, dans une feuille verticale FV le long de la colonne d'image. De la même manière que pour l'accumulation de gradients horizontaux, l'application du principe de l'accumulation de gradients verticaux aux pixels de l'image I est réalisée par un filtre d'accumulation de gradients élémentaires verticaux dont la réponse $G_V$ est :

$$G_V(x,y) \;=\; \sqrt{\int_{-FV/2}^{+FV/2}\left[\frac{\partial I}{\partial y}\right]^2 dy}\;\;.$$

Les gradients sont ainsi accumulés suivant deux directions différentes horizontale X et verticale Y pour chaque pixel p.

Puis au pixel courant p sont associées six valeurs de caractéristiques textuelles égales respectivement aux 3 gradients horizontaux accumulés du pixel p et de ses deux voisins immédiats px1 et px2 suivant la direction X et aux 3 gradients verticaux accumulés du pixel p et de ses deux voisins immédiats py1 et py2 suivant la direction Y. Les valeurs des caractéristiques textuelles prises à trois différentes localisations par direction X ou Y par pixel amènent des informations supplémentaires sur la hauteur des caractères.

La présente invention n'utilise pas des détecteurs de coins connus à cause de leurs réponses non linéaires qui s'appliquent difficilement au principe de seuillage.

Selon l'invention, des coins des caractères sont déterminés au moyen de filtres de coins dérivatifs à partir desquels des réponses directionnelles de coin C sont définis pour chaque pixel de coordonnées x, y, r et 1 par :

$$C_H = \frac{\partial}{\partial y}\left|\frac{\partial I}{\partial x}\right|,\; C_V = \frac{\partial}{\partial x}\left|\frac{\partial I}{\partial y}\right|,\; C_R = \frac{\partial}{\partial l}\left|\frac{\partial I}{\partial r}\right|,\; C_L = \frac{\partial}{\partial r}\left|\frac{\partial I}{\partial l}\right|\;.$$

$C_H$ représente la réponse directionnelle de coin selon la direction horizontale et contribue à la détection ultérieure de points extrêmes de traits verticaux,

$C_V$ représente la réponse directionnelle de coin selon la direction verticale Y et contribue à la détection ultérieure de points extrêmes de traits horizontaux, et

$C_R$ et $C_L$ représentent des réponses directionnelles de coin selon des directions diagonales R et L et contribuent à la détection ultérieure de points extrêmes selon les directions diagonales.

Les réponses directionnelles de coin $C_H$, $C_V$, $C_R$ et $C_L$ présentent l'avantage d'une application aisée du principe de seuillage.

A partir d'une hypothèse de départ selon laquelle les caractères textuels de l'image I ne possèdent aucun coin, le module de détermination des caractéristiques MD initialise les réponses directionnelles de coin $C_H$, $C_V$, $C_R$ et $C_L$ de chaque pixel de l'image à zéro à l'étape E2.

Le module de détermination des caractéristiques MD détermine les réponses directionnelles de coin $C_H$, $C_V$, $C_R$ et $C_L$ à l'étape E3.

Les caractéristiques textuelles de coin sont propagées à tous les pixels de l'image à l'intérieur du rectangle contenant le texte afin d'éparpiller les images de réponse directionnelle de coin dans la direction des gradients des pixels de l'image à l'intérieur du rectangle contenant le texte. Un espace $\Theta$ à quatre orientations discrètes est considéré :

$$\Theta = \{X, Y, R, L\}$$

où X, Y, R et L dénotent respectivement des orientations horizontale, verticale, diagonale droite et diagonale gauche.

A l'étape E4, le module de détermination des caractéristiques MD détermine des angles $\Psi$ des gradients des pixels de l'image I définis par :

$$\psi = \arg\left[\nabla I(x, y)\right] = \arctan\left(\frac{\left(\frac{\partial I(x, y)}{\partial x}\right)}{\left(\frac{\partial I(x, y)}{\partial y}\right)}\right)$$

où $\nabla I(x,y)$ représente le gradient pour un pixel p de coordonnées x, y, r, I ayant un module :

$$\left\|\nabla I(x, y)\right\| = \sqrt{\left(\frac{\partial I(x, y)}{\partial x}\right)^2 + \left(\frac{\partial I(x, y)}{\partial y}\right)^2} \; .$$

Un pixel p a son angle de gradient qui est quantifié en $q(\psi)$ de la manière suivante :

$$\phi = q(\psi) = \begin{cases} X \text{ si } \psi \in \left[-\frac{\pi}{8}, \frac{\pi}{8}\right[ \\[2mm] R \text{ si } \psi \in \left[-\frac{3\pi}{8}, -\frac{3\pi}{8}\right[ \\[2mm] Y \text{ si } \psi \in \left[-\frac{\pi}{2}, \frac{3\pi}{8}\right[ \text{ où } \phi \in \left[\frac{3\pi}{8}, -\frac{\pi}{2}\right[ \\[2mm] L \text{ si } \psi \in \left[\frac{\pi}{8}, \frac{3\pi}{8}\right[ \end{cases}$$

Afin de modéliser la propagation des caractéristiques de coins, l'angle du gradient quantifié de chaque pixel p est lissé en utilisant les valeurs des gradients des huit pixels voisins à l'étape E5. Dans la figure 2, les pixels voisins du pixel courant p sont désignés par px1 et px2 suivant la direction X, py1 et py2 suivant la direction Y, pr1 et pr2 suivant la direction R et pl1 et pl2 suivant la direction L.

Un histogramme des angles de gradient quantifiés en fonction des quatre orientations discrètes comptabilise le nombre de pixels pour chaque orientation ($\phi$) $\in \Theta$) dans le voisinage de chaque pixel p afin de sommer des gradients pondérés des pixels voisins orientés suivant chaque orientation. L'angle de gradient lissé $\phi$ résulte d'une maximalisation de sommes des gradients pondérés comme suit :

$$\phi_S = \arg \max_{\substack{(i \in \text{Voisins et p}) \\ \phi' \in \Theta}} \sum \delta_{\phi' \phi_i} W_i \|\nabla I_i\|$$

$\delta_{\phi' \phi_i}$ désigne le produit de Kronecker défini par:

$\delta_{\phi' \phi_i}$ = 1 si l'angle quantifié $\phi_i$ du pixel voisin i, tel que px1, px2, py1, py2, pr1, pr2, pl1 ou pl2, du pixel courant correspond à la direction $\phi$ qui peut être X, Y, L ou R ; sinon $\delta_{\phi' \phi_i}$ = 0.

$W_i$ représente un coefficient de pondération dans un masque gaussien de pondération défini par la matrice carrée :

$$W = [1\ 2\ 1]^T \otimes [1\ 2\ 1].$$

Pour le pixel courant p, le coefficient de pondération $W_i$ est 4. Les coefficients de pondération $W_i$ pour les pixels px1, px2, py1 et py2 immédiatement voisins suivant les directions X et Y sont égaux à 2. Les coefficients de pondération $W_i$ pour les quatre autres pixels voisins pr1, pr2, pl1 et pl2 suivant les directions diagonales aux directions X et Y sont égaux à 1 et donc inférieurs aux coefficients de pondération pour les pixels immédiatement voisins puisque ces derniers sont plus éloignés du pixel courant et sont moins prépondérants statistiquement suivant des directions habituelles d'écriture dans des images.

$\|\nabla I_i\|$ représente le module du gradient de l'un des neuf pixels px1 à p12.

Le module de détermination MD associe ainsi l'une $C^s$ des quatre orientations discrètes au pixel courant p lorsque la direction selon l'angle de gradient lissé $\phi = \phi(\psi)$ appartient à l'intervalle angulaire associé à cette orientation, à l'étape E6. Par exemple, lorsque $(\phi)_S$ = X pour le pixel courant p, alors la réponse directionnelle du pixel p est $C^s = C_H$ ; lorsque $\phi_s$ = Y pour le pixel p, alors la réponse directionnelle du pixel p est $C^s = C_V$. Une mémoire interne au module de détermination de caractéristiques MD mémorise les réponses directionnelles de coin associées respectivement aux pixels de l'image I à l'étape E6.

Les réponses directionnelles de coin associées aux pixels sont propagées suivant les directions des orientations assignées respectivement aux angles de gradient des pixels suivant un parcours prédéterminé dans le rectangle contenant le texte. Le parcours prédéterminé dépend de la taille de fonte maximale des caractères du texte de l'image I. La taille de fonte maximale des caractères est estimée préalablement en fonction de la nature de l'image I à traiter. Le module de détermination des caractéristiques MD sélectionne alors la plus grande valeur $C^{max}$ des réponses directionnelles de coin associées au pixel courant p et au pixel précédant celui-ci selon le parcours prédéterminé lorsque ces deux réponses sont associées à une même direction, à l'étape E7.

De la même manière que pour un gradient accumulé $G_H$, $G_V$, du pixel courant, les réponses directionnelles de coin attribuées aux pixels voisins selon l'étape E7 sont accumulées suivant au moins la direction de texte supposée en une réponse accumulée $C_a$, à l'étape E8.

La réponse accumulée $C_a$ a deux composantes $C_{aH}$, $C_{aV}$ suivant les orientations horizontale H et verticale V. Par exemple, la réponse $C_{aH}$ accumule suivant la direction de texte supposée ici X, les réponses directionnelles de coin, maximisées et attribuées $C^{max}$ aux (2 x 6 + 1) = 13 pixels de part et d'autre du pixel courant, y compris ce dernier, à l'étape E7, orientées suivant la direction X ; d'une manière analogue la réponse $C_{aV}$ accumule suivant la direction Y, afin d'obtenir les deux composantes de réponse accumulée pour le pixel courant p.

A ce stade, les caractéristiques textuelles du pixel courant sont ainsi les quatre composantes $G_H$, $G_V$, $C_{aH}$ et $C_{aV}$.

Les caractéristiques des pixels sont déterminés pour deux niveaux d'une pyramide gaussienne, c'est-à-dire pour deux rectangles de tailles différentes, afin de considérer la grande variabilité de la taille de la fonte des caractères du texte dans des vidéo, à l'étape E9. Chaque pixel dans un niveau de la pyramide est classé en prenant en compte l'information extraite du voisinage des deux pixels immédiatement voisins px1 et px2, py1 et py2 du pixel courant suivant les directions horizontale H et verticale V du pixel. Les caractéristiques textuelles des pixels sont regroupées dans un vecteur de caractéristiques textuelles de dimension 2 * (3 * 4) = 24. Les composantes de ce vecteur pour un niveau de pyramide sont indiquées dans le tableau ci-après :

| Nombre de valeurs | Caractéristique |
|---|---|
| 3 | Gradients accumulés horizontalement $G_H$ pour p, px1, px2 |
| 3 | Gradients accumulées verticalement $G_V$ pour p, py1, py2 |
| 3 | Réponses de coin accumulées horizontalement $C_{aH}$ pour p, px1, px2 |
| 3 | Réponse de coin accumulée verticalement $C_{aV}$ pour p, py1, py2 |

Puis le module de classification de pixels MC discrimine les pixels de texte et les pixels de non texte en fonction des vecteurs de caractéristiques textuelles déterminés ci-dessus.

**Revendications**

1. Procédé de détermination de caractéristiques textuelles de pixels pour discriminer des pixels de texte et des pixels de non texte dans une image (T), comprenant une accumulation (A1, E1) de gradients d'intensité lumineuse suivant une première direction pour chaque pixel de l'image en des gradients accumulés, **caractérisé en ce qu'**il comprend les étapes suivantes :

   - pour chaque pixel courant (p), détermination (A2) d'un couple de bords (a, b) dans une fonction des gradients accumulés ($G_{Hi}$) pour un intervalle de pixels prédéterminé (TV) s'étendant suivant une deuxième direction perpendiculaire à la première direction et centré sur le pixel courant, en recherchant une hauteur élevée (HM) entre la valeur maximale ($G_{Hm}$) des gradients accumulés et la moyenne des gradients accumulés ($G_{Ha}$, $G_{Hb}$) auxdits bords et une largeur faible (W) entre les bords, pour différentes valeurs des deux bords respectivement comprises dans les deux moitiés de l'intervalle prédéterminé (TV) ; et
   - discrimination (A5) des pixels de texte et des pixels de non texte en fonction des hauteurs élevées (HM) et des largeurs faibles (W) pour les couples de bords déterminés (a, b) des pixels.

2. Procédé conforme à la revendication 1, comprenant une détermination de la différence de gradients accumulés ($G_{Ha}$, $G_{Hb}$) aux bords (a, b) déterminés pour chaque pixel (p) afin de discriminer les pixels de texte et de non texte également en fonction des différences de gradients déterminés pour les couples de bords (a, b) des pixels.

3. Procédé conforme à la revendication 1 ou 2, comprenant une détermination de la moyenne des gradients accumulés entre les bords (a, b) déterminés pour chaque pixel (p) afin de discriminer les pixels de texte et de non texte également en fonction des moyennes pour les couples de bords déterminés (a, b) des pixels.

4. Procédé conforme à l'une quelconque des revendications 1 à 3, selon lequel la détermination (A2) d'un couple de bords (a, b) pour chaque pixel courant (p) est fonction d'une maximalisation d'une variable dépendant de la largeur (W) entre les deux bords (a, b), de gradients accumulés minimal et maximal dans l'intervalle prédéterminé (TV), de la hauteur (HM) entre la valeur maximale ($G_{Hm}$) des gradients accumulés et la moyenne des gradients accumulés ($G_{Ha}$, $G_{Hb}$), et de la moyenne des gradients accumulés entre les deux bords, pour différentes valeurs des deux bords respectivement comprises dans les deux moitiés de l'intervalle prédéterminé (TV).

5. Procédé conforme à l'une quelconque des revendications 1 à 4, comprenant une sommation des différences de largeur faibles (W) pour des couples de pixels voisins le long d'une fenêtre orientée suivant la première direction et de largeur prédéterminée ($S_W$) en une somme représentative de la présence d'une ligne de base de texte et servant également à discriminer les pixels de texte et les pixels de non texte.

6. Procédé conforme à l'une quelconque des revendications 1 à 5, **caractérisé en ce qu'**il comprend les étapes suivantes pour chaque pixel courant (p) de l'image :

   - détermination (E3) de réponses directionnelles de coin ($C_H$, $C_V$, $C_R$ et $C_L$) suivant quatre orientations prédéterminées ;
   - quantification (E4) d'un angle de gradient relativement dans quatre orientations prédéterminées (X, Y, R, L) ;
   - lissage (E5) de l'angle de gradient quantifié en fonction des angles de gradient quantifiés et de gradients de pixels voisins au pixel ; et

- association (E6) à chaque pixel de l'une (C$^s$) des réponses directionnelles de coins en fonction de l'angle de gradient lissé du pixel.

7. Procédé conforme à la revendication 6, selon lequel l'angle de gradient quantifié de chaque pixel courant est lissé en fonction d'une maximalisation de sommes de gradients des pixels voisins du pixel courant, pondérés et orientés respectivement suivant les orientations prédéterminées (X, Y, R, L).

8. Procédé conforme à la revendication 7, selon lequel, dans une somme de gradients pour une orientation prédéterminée respective, des coefficients de pondération des gradients pour le pixel courant, pour des pixels immédiatement voisins suivant les première et deuxième directions et pour des pixels voisins suivant des directions diagonales aux première et deuxième directions sont décroissants.

9. Procédé conforme à l'une quelconque des revendications 6 à 8, comprenant les étapes suivantes :

- association (E7) à chaque pixel de la plus grande des réponses directionnelles associées au pixel courant et au pixel précédant celui-ci selon un parcours prédéterminé ;
- accumulation (E8) des réponses directionnelles de coin associées à chaque pixel et aux pixels voisins à celui-ci suivant les première et deuxième directions ;
- afin de discriminer les pixels de texte et de non texte également en fonction des réponses directionnelles de coin accumulées.

# FIG. 1

T

MD

**Module de détermination de caractéristiques textuelles des pixels**

MC

**Module de classification de pixels (SVM)**

# FIG. 2

I

Y L X R

ly

| | | | | | | | | | | | | | | |
|---|---|---|---|---|---|---|---|---|---|---|---|---|---|---|

Ix

FV

| | pr2 | py1 | pl1 | |
|---|---|---|---|---|
| | px2 | p | px1 | |
| | pl2 | py2 | pr1 | |

FH

# FIG.3

A1
Accumulation des gradients horizontaux $G_H$

A2
Estimation du mode

A3
Extraction et détermination des caractéristiques textuelles

A4
Détermination de la présence de ligne de base

A5
Détermination des caractéristiques textuelles suivant les orientations et sur deux niveaux d'une pyramide gaussienne

A6
Classification des pixels

# FIG. 4

# FIG. 5

## FIG. 6A

## FIG. 6B

## FIG. 6C

## FIG. 6D

## FIG. 6E

## FIG. 6F

## FIG. 6G

## FIG. 6H

# FIG. 7

E1
Détermination de $G_H$ et de $G_V$ pour chaque pixel

E2
Initialisation de $C_H$, $C_V$, $C_R$, $C_L$
pour chaque pixel

E3
Détermination de $C_H$, $C_V$, $C_R$, $C_L$
pour chaque pixel

E4
Accumulation de $\Psi$ pour chaque pixel

E5
Lissage de $\Psi \rightarrow \phi = q(\Psi)$

E6
Assignation et mémorisation de $C^S$ selon $\phi$

E7
Propagation des réponses de coin directionnelles :
$C^{max} = \sup [C^S(p), C^S(\text{précédent})]$

E8
Accumulation des réponses de coin directionnelles
pour p : $C_{aH}$, $C_{aV}$, $C_{aR}$, $C_{aL}$

E9
Détermination des caractéristiques textuelles sur deux
niveaux d'une pyramide gaussienne

**Office européen
des brevets**

# RAPPORT DE RECHERCHE EUROPEENNE

Numéro de la demande

EP 04 07 7715

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 825 173 A (FRANCE TELECOM) 29 novembre 2002 (2002-11-29) * abrégé * ----- | 1-9 | G06K9/20 H04N1/40 |
| A | LEBOURGEOIS F ED - INSTITUTE OF ELECTRICAL AND ELECTRONICS ENGINEERS: "Robust multifont OCR system from gray level images" PROCEEDINGS OF THE 4TH INTERNATIONAL CONFERENCE ON DOCUMENT ANALYSIS AND RECOGNITION. (ICDAR). ULM, GERMANY, AUG. 18 - 20, 1997, PROCEEDINGS OF THE ICDAR, LOS ALAMITOS, IEEE COMP. SOC, US, vol. VOL. II, 18 août 1997 (1997-08-18), pages 1-5, XP010244672 ISBN: 0-8186-7898-4 * section 2 "text localization in a complex scene" * ----- | 1-9 | |
| A | DUONG J ET AL: "Extraction of text areas in printed document images" NEW YORK, NY, USA, ACM, USA, novembre 2001 (2001-11), pages 157-164, XP002284340 ISBN: 1-58113-432-0 * section 3.1 "areas detection" * * section 5. "further work" * ----- | 1-9 | DOMAINES TECHNIQUES RECHERCHES (Int.Cl.7) G06K H04N |
| A | JUNG K ET AL: "SUPPORT VECTOR MACHINES FOR TEXT LOCATION IN NEWS VIDEO IMAGES" PROCEEDINGS OF IEEE TENCON 2000. IEEE REGION 10 CONFERENCE. KUALA LUMPUR, SEPT. 24 - 27, 2000, IEEE REGION 10 ANNUAL CONFERENCE, NEW YORK, NY : IEEE, US, vol. VOL. 2 OF 3, 24 septembre 2000 (2000-09-24), pages 176-180, XP000987972 ISBN: 0-7803-6356-6 * abrégé * ----- | 1-9 | |

Le présent rapport a été établi pour toutes les revendications

| Lieu de la recherche | Date d'achèvement de la recherche | Examinateur |
|---|---|---|
| Berlin | 2 février 2005 | Gao, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

**EP 1 522 951 A1**

**ANNEXE AU RAPPORT DE RECHERCHE EUROPEENNE
RELATIF A LA DEMANDE DE BREVET EUROPEEN NO.**

EP 04 07 7715

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2005

| Document brevet cité<br>au rapport de recherche | Date de<br>publication | Membre(s) de la<br>famille de brevet(s) | Date de<br>publication |
|---|---|---|---|
| FR 2825173 A | 29-11-2002 | FR 2825173 A1<br>EP 1390905 A1<br>WO 02095662 A1 | 29-11-2002<br>25-02-2004<br>28-11-2002 |

EPO FORM P0460

Pour tout renseignement concernant cette annexe : voir Journal Officiel de l'Office européen des brevets, No.12/82